# EUROPÄISCHE PATENTSCHRIFT

(11) **EP 3 351 741 B1**
(45) Veröffentlichungstag und Bekanntmachung des Hinweises auf die Patenterteilung: **30.09.2020**
(21) Anmeldenummer: 17401128.8
(22) Anmeldetag: 12.12.2017
(51) Int. Cl.: F01D 17/08, F01D 25/30, F02C 9/28

(54) **GASTURBINE**
GAS TURBINE
TURBINE À GAZ

(30) Priorität: 23.01.2017 DE 102017101161
(43) Veröffentlichungstag der Anmeldung: 25.07.2018
(73) Patentinhaber: MAN Energy Solutions SE, 86153 Augsburg (DE)
(72) Erfinder: Günther, Christian, 46539 Dinslaken (DE); Kluß, David, 46147 Oberhausen (DE); El Masalme, Jaman, 46499 Hamminkeln (DE)

(56) Entgegenhaltungen:
- EP-A1- 1 198 739
- US-A1- 2004 148 940
- US-A1- 2006 245 914
- US-A1- 2013 343 066
- US-A1- 2016 356 174

## Beschreibung

Die Erfindung betrifft eine Gasturbine.

Der grundsätzliche Aufbau einer Gasturbine, wie zum Beispiel einer Industriegasturbine, ist dem hier angesprochenen Fachmann grundsätzlich bekannt. So verfügt eine Gasturbine als wesentliche Baugruppen über einen Verdichter, über einen mindestens eine Brennkammer aufweisenden Brenner sowie über eine Turbine. Im Verdichter wird ein Luftstrom verdichtet, wobei der in dem Verdichter verdichtete Luftstrom der oder jeder Brennkammer der Gasturbine zuführbar ist. In der oder jeder Brennkammer der Gasturbine wird in Anwesenheit der verdichteten Luft ein Brennstoff verbrannt, wodurch die Luft erhitzt wird. Die erhitzte Luft ist ausgehend von der oder jeder Brennkammer der Turbine der Gasturbine zuführbar, wobei in der Turbine die erhitzte Luft entspannt wird. Die Arbeitsleistung einer solchen Gasturbine ergibt sich dann aus der Differenz der von der Turbine abgegebenen und der vom Verdichter aufgenommenen Leistung. Diese Differenz entsteht durch den Energieeintrag in der oder jeder Brennkammer des Brenners.

Aus der Praxis bekannte Gasturbinen verfügen weiterhin über einen Diffusor, der in Strömungsrichtung der entspannten Luft gesehen stromabwärts der Turbine angeordnet ist. Zur Reglung und/oder Steuerung des Betriebs einer Gasturbine ist es von Bedeutung, eine sogenannte thermodynamische Mitteltemperatur der entspannten Luft, die auch als ausgemischte Turbinenaustrittstemperatur bezeichnet wird, zu ermitteln, wobei hierzu bei aus der Praxis bekannten Gasturbinen mehrere Temperatursensoren zum Einsatz kommen, die stromabwärts der Turbine und ggf. stromaufwärts des Diffusors im Bereich eines ringförmigen Strömungskanals für die entspannte Luft positioniert sind.

EP 1 198 739 A1 und US 2016/356174 A1 offenbaren jeweils eine Gasturbine nach dem Oberbegriff des Patentanspruchs 1.

US 2004/148940 A1, US 2006/245914 A1 und US 2013/343066 A1 offenbaren weiteren Stand der Technik.

Es besteht das Problem, dass über den Umfang und die Kanalhöhe des Strömungskanals erhebliche Temperaturgradienten auftreten können, wodurch es erforderlich ist, über den Umfang und die Kanalhöhe des Strömungskanals eine Vielzahl von Temperatursensoren anzuordnen und mit Hilfe eines Modells aus den von den Temperatursensoren umfassten Messwerten dann die thermodynamische Mitteltemperatur oder die ausgemischte Turbinenaustrittstemperatur der entspannten Luft zu ermitteln. Dies ist jedoch nicht nur aufwändig, sondern abhängig von der Anzahl der Temperatursensoren auch fehleranfällig.

Es besteht daher Bedarf an einer Gasturbine, bei welcher die thermodynamische Mitteltemperatur oder die ausgemischte Turbinenaustrittstemperatur der entspannten Luft mit geringerem Aufwand und genauer ermittelt werden kann. Hiervon ausgehend liegt der Erfindung die Aufgabe zugrunde, eine neuartige Gasturbine zu schaffen. Diese Aufgabe wird durch eine Gasturbine nach Anspruch 1 gelöst. Die Temperatursensoren sind im Bereich eines Diffusordeckels angeordnet, der an einem Austrittsende des Diffusors einen radial innen von einem Strömungskanal des Diffusors positionierten Hohlraum desselben verschließt. Das Anordnen der Temperatursensoren im Bereich des Diffusordeckels, der an dem Austrittsende des Diffusors radial innen vom Strömungskanal des Diffusors einen Hohlraum desselben verschließt, macht sich eine Ablösung der Strömung stromabwärts des Diffusors zunutze. In diesem Bereich positionierte Temperatursensoren können mit geringem Aufwand und genau die thermodynamische Mitteltemperatur oder die ausgemischte Turbinenaustrittstemperatur der entspannten Luft ermitteln.

Die Temperatursensoren sind erfindungsgemäß in Strömungsrichtung der entspannten Luft gesehen an einer stromabwärtigen Seite des Diffusordeckels angeordnet, wobei die Temperatursensoren vorzugsweise entweder unmittelbar an dieser Seite des Diffusordeckels angeordnet sind oder von dieser Seite des Diffusordeckels einen Abstand von maximal 50 cm, bevorzugt von maximal 40cm, besonders bevorzugt von maximal 30 cm, aufweisen. Dann, wenn die Temperatursensoren in diesem Bereich positioniert sind, kann die thermodynamische Mitteltemperatur oder die ausgemischte Turbinenaustrittstemperatur der entspannten Luft besonders vorteilhaft ermittelt werden.

Nach einer vorteilhaften Weiterbildung sind in einer axialen Projektion gesehen die Temperatursensoren innerhalb eines von einem Umfang des Diffusordeckels definierten Bereichs angeordnet, vorzugsweise in einem Kreisringbereich, der innen von einem Innenradius und außen von einem Außenradius definiert wird. Der Innenradius beträgt insbesondere zwischen 5% und 45%, bevorzugt zwischen 10% und 40%, besonders bevorzugt zwischen 20% und 30%, des Radius des Diffusordeckels. Der Außenradius beträgt insbesondere zwischen 55% und 95%, bevorzugt zwischen 60% und 90%, besonders bevorzugt zwischen 70% und 80%, des Radius des Diffusordeckels. Dieser Bereich für die Positionierung der Temperatursensoren ist bevorzugt, um die thermodynamische Mitteltemperatur oder die ausgemischte Turbinenaustrittstemperatur der entspannten Luft zu ermitteln.

Nach einer vorteilhaften Weiterbildung sind in einer axialen Projektion die Temperatursensoren, vorzugsweise drei Temperatursensoren, gleichverteilt auf einer Kreiskontur positioniert sind. Die Verwendung von drei Temperatursensoren ist bevorzugt, um über einen Kreuzvergleich der Messwerte, der Temperatursensoren auf defekte Temperatursensoren zu schließen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Gasturbine im Querschnitt;

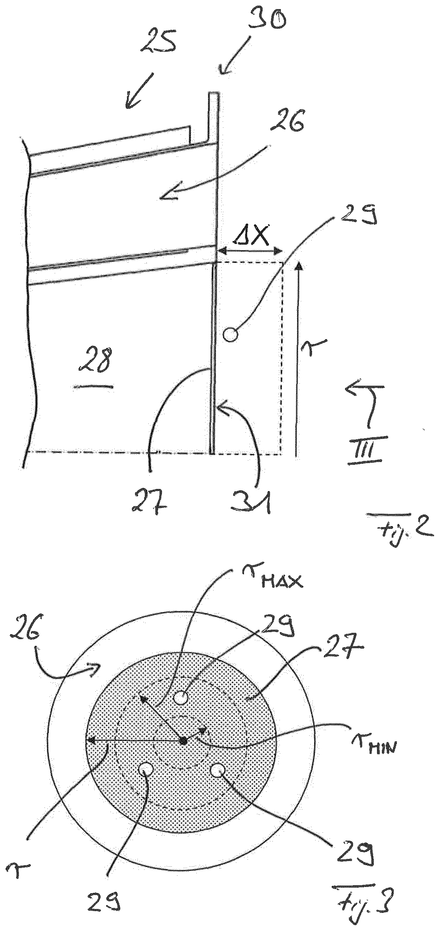

- Fig. 2: ein Detail der Fig. 1; und
- Fig. 3: das Detail der Fig. 2 in Blickrichtung III.

Die Erfindung betrifft eine Gasturbine.

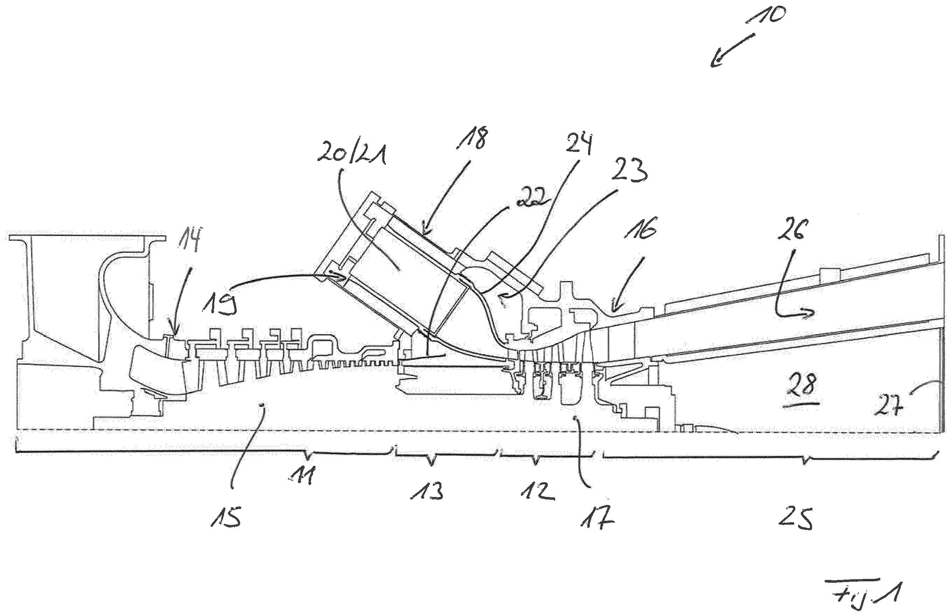

Fig. 1 zeigt einen Axialschnitt durch eine Gasturbine 10 im Bereich eines Verdichters 11, einer Turbine 12 und einem mindestens eine Brennkammer aufweisenden, zwischen den Verdichter 11 und die Turbine 12 geschalteten Brenner 13. Von dem Verdichter 11 sind ein statorseitiges Gehäuse 14 und eine rotorseitige Welle 15 mit mehreren Verdichterstufen gezeigt. Von der Turbine 12 sind ein statorseitiges Gehäuse 16 und eine rotorseitige Welle 17 mit mehreren Turbinenstufen gezeigt. Die rotorseitige Welle 15 des Verdichters 11 und die rotorseitige Welle 17 der Turbine 12 sind miteinander gekoppelt.

Von dem Brenner 13 ist ein Brennergehäuse 18 gezeigt, welches zwischen das statorseitige Gehäuse 14 des Verdichters 11 und das statorseitige Gehäuse 16 der Turbine 12 geschaltet ist. Vorzugsweise weist das Brennergehäuse 18 mehrere Ausnehmungen 19 auf, wobei jede Ausnehmung 19 der Aufnahme jeweils mindestens eines Flammrohrs 20 einer jeweiligen Brennkammer 21 dient. Über den Umfang des Brennergehäuses 18 sind diese Ausnehmungen 19 zur Aufnahme der Flammrohre 20 vorzugsweise in Umfangsrichtung gesehen gleichverteilt angeordnet.

Der Verdichter 11 dient der Verdichtung eines Luftstroms. Der verdichtete Luftstrom verlässt den Verdichter 11 über einen Diffusor 22 und gelangt über den Diffusor 22 in einen ringförmigen Strömungskanal 23, der vom Brennergehäuse 18 bereitgestellt wird.

Ausgehend von diesem ringartigen Strömungskanal 23 des Brennergehäuses 18 gelangt die verdichtete Luft in den Bereich jeder Brennkammer 21 und damit in den Bereich jedes Flammrohrs 20, wobei im Bereich der jeweiligen Brennkammer 21 ein Kraftstoff verbrannt wird und hierbei die Luft erhitzt wird.

Die erhitzte Luft wird ausgehend von der jeweiligen Brennkammer 21 der Turbine 12 zugeführt, wobei hierzu Zwischenstücke 24 dienen. Ausgehend von jeder Brennkammer 21 kann die erhitzte Luft über jeweils ein Zwischenstück 24 der Turbine 12 der Gasturbine 10 zugeführt werden.

Im Bereich der Turbine 12 der Gasturbine 10 wird die erhitzte Luft entspannt. Stromabwärts der Turbine 12 ist ein Diffusor 25 angeordnet, über den die entspannte Luft stromabwärts der Turbine 12 geführt wird. Der Diffusor 25 verfügt über einen ringförmigen Strömungskanal 26, wobei radial innen von diesem Strömungskanal 26 ein vom Strömungskanal 26 getrennter Hohlraum 28 angeordnet ist, der an einem stromabwärtigen Ende des Diffusors 25 von einem Diffusordeckel 27 verschlossen ist.

Die Gasturbine 10 verfügt über mehrere Temperatursensoren 29, wobei in Abhängigkeit der Messwerte der Temperatursensoren 29 eine thermodynamische Mitteltemperatur oder ausgemischte Turbinenaustrittstemperatur der entspannten Luft ermittelt wird. Erfindungsgemäß sind die Temperatursensoren 29 im Bereich des Diffusordeckels 27 angeordnet, der, wie bereits ausgeführt, an einem austrittsseitigen Ende 30 des Diffusors 25 den radial innen vom Strömungskanal 26 des Diffusors 25 positionierten Hohlraum 28 des Diffusors 25 verschließt.

Die Temperatursensoren 29 sind dabei in Strömungsrichtung der entspannten Luft gesehen stromabwärts des Diffusordeckels 27 angeordnet, und zwar an bzw. benachbart zu einer stromabwärtigen Seite 31 des Diffusordeckels 27.

Dabei können die Temperatursensoren 29 unmittelbar an dieser stromabwärtigen Seite 31 des Diffusordeckels 27 angeordnet sein, ebenso ist es möglich, dass die Temperatursensoren 29 von dieser stromabwärtigen Seite 31 des Diffusordeckels 27 einen Abstand ΔX aufweisen, der maximal 50 cm, bevorzugt maximal 40 cm, besonders bevorzugt maximal 30 cm, beträgt.

In der axialen Projektion gesehen sind die Temperatursensoren 29 innerhalb eines von einem durch den Radius r des Diffusordeckels 27 definierten Umfangs des Diffu-sordeckels 27 positioniert.

Besonders bevorzugt ist vorgesehen, dass die Temperatursensoren 29 in einem Kreisringbereich angeordnet sind, der innen von einem Innenradius r_{MIN} und außen von einem Außenradius r_{MAX} definiert wird. Der Innenradius r_{MIN} beträgt dabei zwischen 5% und 45%, bevorzugt zwischen 10% und 40%, besonders bevorzugt zwischen 20% und 30%, des Radius r des Diffusordeckels 27. Der Außenradius r_{MAX} beträgt zwischen 55% und 95%, bevorzugt zwischen 60% und 90%, besonders bevorzugt zwischen 70% und 80%, des Radius r des Diffusordeckels 27.

In einer besonders bevorzugten Ausführungsform kann vorgesehen sein, dass die Temperatursensoren 29 allesamt auf einer Kreisbahn positioniert sind, dessen Radius 50% des Radius r des Diffusordeckels 27 entspricht.

Vorzugsweise sind drei Temperatursensoren 29 vorhanden, die auf einer Kreiskontur bzw. Kreisbahn gleichverteilt positioniert sind, wobei dann die einzelnen Temperatursensoren 29 jeweils einen Winkelabstand von 120° zueinander aufweisen. Dann, wenn drei Temperatursensoren 29 verwendet werden, kann durch Vergleich der Messwerte eines jeden Temperatursensors 29 mit den anderen Messwerten der anderen Temperatursensoren 29 leicht ermittelt werden, ob ein Temperatursensor 29 defekt ist.

Es ist möglich, die Temperatursensoren 29 am Diffusordeckel 27 zu montieren. Alternativ ist es auch möglich, die Temperatursensoren 29 an einer radial äußeren Begrenzungswand, zum Beispiel an den an den Diffusor folgenden Strömungskanal, zu montieren. Auch an einer radial inneren Begrenzungswand des Strömungskanals 26 des Diffusors 25 ist die Anbringung möglich.

Mit der vorliegenden Erfindung wird vorgeschlagen, die thermodynamische Mitteltemperatur oder ausgemischte Turbinenaustrittstemperatur der entspannten Luft mit Hilfe von Temperatursensoren 29 zu messen, die nicht im Hauptströmungskanal der Turbine 12 oder des Diffusors 25 positioniert sind, sondern vielmehr in einem Ablösegebiet der Strömung stromabwärts des Diffusors 25 bzw. an einem stromabwärtigen Ende 30 des Diffusors 25 im Bereich des Diffusordeckels 27. Hier liegt eine gute Durchmischung der entspannten Luft vor, so dass die thermodynamische Mitteltemperatur oder ausgemischte Turbinenaustrittstemperatur der entspannten Luft genau mit einer geringen Anzahl von Temperatursensoren 29 erfasst werden kann. Die Temperatursensoren 29 liegen in einem geschützten Bereich und sind so vor Beschädigungen geschützt.

### Bezugszeichenliste

- 10: Gasturbine
- 11: Verdichter
- 12: Turbine
- 13: Brenner
- 14: Gehäuse
- 15: Welle
- 16: Gehäuse
- 17: Welle
- 18: Brennergehäuse
- 19: Ausnehmung
- 20: Flammrohr
- 21: Brennkammer
- 22: Diffusor
- 23: Strömungskanal
- 24: Zwischenstück
- 25: Diffusor
- 26: Strömungskanal
- 27: Diffusordeckel
- 28: Hohlraum
- 29: Temperatursensor
- 30: Austrittsende
- 31: Seite

## Patentansprüche

1. Gasturbine (10), mit
einem Verdichter (11), in welchem Luft verdichtbar ist;
einem mindestens eine Brennkammer (21) aufweisenden Brenner (13), welchem die im Verdichter (11) verdichtete Luft zuführbar ist und in welchem in Anwesenheit der verdichteten Luft ein Brennstoff unter Erhitzung der Luft verbrennbar ist;
einer Turbine (12), in welcher die erhitze Luft entspannbar ist;
einem in Strömungsrichtung der entspannten Luft gesehen stromabwärts der Turbine (12) angeordneten Diffusor (25);
mehreren Temperatursensoren (29), in abhängig derer Messwerte eine thermodynamische Mitteltemperatur oder eine ausgemischte Turbinenaustrittstemperatur der entspannten Luft ermittelbar ist;
**dadurch gekennzeichnet, dass**
die Temperatursensoren (29) in Strömungsrichtung der entspannten Luft gesehen an einer stromabwärtigen Seite (31) eines Diffusordeckels (27) angeordnet sind, der an einem Austrittsende (30) des Diffusors (25) einen radial innen von einem Strömungskanal (26) des Diffusors (25) positionierten Hohlraum (28) desselben verschließt.

2. Gasturbine nach Anspruch 1, **dadurch gekennzeichnet, dass** die Temperatursensoren (29) unmittelbar an dieser Seite (31) des Diffusordeckels(27) angeordnet sind.

3. Gasturbine nach Anspruch 1, **dadurch gekennzeichnet, dass** die Temperatursensoren (29) von dieser Seite (31) des Diffusordeckels (27) einen Abstand von maximal 50 cm, bevorzugt von maximal 40 cm, besonders bevorzugt von maximal 30 cm, aufweisen.

4. Gasturbine nach einem der Ansprüche 1 bis 3, **dadurch gekennzeichnet, dass** in der Strömungsrichtung der entspannten Luftgesehen die Temperatursensoren (29) innerhalb eines von einem Umfang des Diffusordeckels (27) definierten Bereichs angeordnet sind.

5. Gasturbine nach Anspruch 4, **dadurch gekennzeichnet, dass** die Temperatursensoren (29) in einem Kreisringbereich angeordnet sind, der innen von einem Innenradius (r_{MIN}) und außen von einem Außenradius (r_{MAX}) definiert wird.

6. Gasturbine nach Anspruch 5, **dadurch gekennzeichnet, dass** der Innenradius zwischen 5% und 45%, bevorzugt zwischen 10% und 40%, besonders bevorzugt zwischen 20% und 30%, des Radius des Diffusordeckels beträgt.

7. Gasturbine nach Anspruch 5 oder 6, **dadurch gekennzeichnet, dass** der Außenradius zwischen 55% und 95%, bevorzugt zwischen 60% und 90%, besonders bevorzugt zwischen 70% und 80%, des Radius des Diffusordeckels (27) beträgt.

8. Gasturbine nach einem der Ansprüche 1 bis 7, **dadurch gekennzeichnet, dass** in der Strömungsrichtung der entspannten Luft gesehen die Temperatursensoren (29) gleichverteilt auf einer Kreiskontur positioniert sind.

9. Gasturbine nach einem der Ansprüche 1 bis 8, **dadurch gekennzeichnet, dass** im Bereich des Diffusordeckels (27) drei Temperatursensoren (29) angeordnet sind.

10. Gasturbine nach einem der Ansprüche 1 bis 9, **dadurch gekennzeichnet, dass** die Temperatursensoren (29) an dem Diffusordeckel (27) montiert sind.

11. Gasturbine nach einem der Ansprüche 1 bis 10; **dadurch gekennzeichnet, dass** die Temperatursensoren (29) an einer radial äußeren Begrenzungswand des auf den Diffusor (25) folgenden Strömungskanals in Form eines Rohres oder an einer radial inneren Begrenzungswand des Strömungskanals (26) des Diffusors (25) montiert sind.

## Claims

1. A gas turbine (10) having
a compressor (11), in which air is compressible;
a burner (13) comprising at least one combustion chamber (21), to which the air compressed in the compressor (11) is feedable and in which in the presence of the compressed air a fuel, subject to the heating of the air, is combustible;
a turbine (12), in which the heated air is expandable;
a diffuser (25) which seen in the flow direction of the expanded air is arranged downstream of the turbine (12);
multiple temperature sensors (29), as a function of the measurement values of which a thermodynamic mean temperature or a mixed turbine outlet temperate of the expanded air is determinable;
**characterized in that**
the temperature sensors (29) seen in the flow direction of the expanded air are arranged on a downstream side (31) of a diffuser cover (27), which at an outlet end (30) of the diffuser (25) closes off a hollow space (28) of the same that is positioned radially inside of a flow passage (26) of the diffuser (25) .

2. The gas turbine according to Claim 1, **characterized in that** the temperature sensors (29) are directly arranged on this side (31) of the diffuser cover (27).

3. The gas turbine according to Claim 1, **characterized in that** the temperature sensors (29) from this side (31) of the diffuser cover (27) have a distance of maximally 50 cm, preferably of maximally 40 cm, particularly preferably of maximally 30 cm.

4. The gas turbine according to any one of the Claims 1 to 3, **characterized in that** seen in the flow direction of the expanded air the temperature sensors (29) are arranged within a region defined by a circumference of the diffuser cover (27).

5. The gas turbine according to Claim 4, **characterized in that** the temperature sensors (29) are arranged in a circular ring region, which on the inside is defined by an inner radius (r_{MIN}) and on the outside by an outer radius (r_{MAX}).

6. The gas turbine according to Claim 5, **characterized in that** the inner radius amounts to between 5% and 45%, preferably between 10% and 40%, particularly preferably between 20% and 30% of the radius of the diffuser cover.

7. The gas turbine according to Claim 5 or 6, **characterized in that** the outer radius amounts to between 55% and 95%, preferably between 60% and 90%, particularly preferably between 70% and 80% of the radius of the diffuser cover (27).

8. The gas turbine according to any one of the Claims 1 to 7, **characterized in that** seen in the flow direction of the expanded air the temperature sensors (29) are positioned equally distributed on a circular contour.

9. The gas turbine according to any one of the Claims 1 to 8, **characterized in that** in the region of the diffuser cover (27) three temperature sensors (29) are arranged.

10. The gas turbine according to any one of the Claims 1 to 9, **characterized in that** the temperature sensors (29) are mounted on the diffuser cover (27).

11. The gas turbine according to any one of the Claims 1 to 10, **characterized in that** the temperature sensors (29) are mounted on a radially outer boundary wall of the flow passage following the diffuser (25) in the form of a tube or on a radially inner boundary wall of the flow passage (26) of the diffuser (25).

## Revendications

1. Turbine à gaz (10), comportant
un compresseur (11) dans lequel l'air peut être comprimé;
un brûleur (13) présentant au moins une chambre de combustion (21), dans lequel l'air comprimé dans le compresseur (11) peut être alimenté et dans lequel un combustible peut être brûlé tandis que l'air est chauffé en présence de l'air comprimé;
une turbine (12) dans laquelle l'air chauffé peut être détendu;
un diffuseur (25) disposé en aval de la turbine (12) vu dans la direction d'écoulement de l'air détendu;
une pluralité de capteurs de température (29), en fonction des valeurs mesurées desquels une température moyenne thermodynamique ou une température de sortie de turbine mixte de l'air détendu peut être déterminée;
**caractérisé en ce que**
les capteurs de température (29), vus dans la direction d'écoulement de l'air détendu, sont disposés sur un côté aval (31) d'un couvercle de diffuseur (27), qui à une extrémité de sortie (30) du diffuseur (25) obture une cavité (28) de ce dernier positionnée radialement à l'intérieur par un canal d'écoulement (26) du diffuseur (25).

2. Turbine à gaz selon la revendication 1, **caractérisée en ce que** les capteurs de température (29) sont disposés directement sur ce côté (31) du couvercle de diffuseur (27).

3. Turbine à gaz selon la revendication 1, **caractérisée en ce que** les capteurs de température (29) de ce côté (31) du couvercle de diffuseur (27) présentent un écart maximum de 50 cm, de préférence un écart maximum de 40 cm, de manière particulièrement préférée un écart maximum de 30 cm.

4. Turbine à gaz selon une des revendications 1 à 3, **caractérisée** en **que**, dans vus la direction d'écoulement de l'air détendu, les capteurs de température (29) sont disposés à l'intérieur d'une zone définie par une circonférence du couvercle de diffuseur (27).

5. Turbine à gaz selon la revendication 4, **caractérisée en ce que** les capteurs de température (29) sont disposés dans une région annulaire circulaire qui est définie à l'intérieur par un rayon intérieur (r_{MIN}) et à l'extérieur par un rayon extérieur (r_{MAX}).

6. Turbine à gaz selon la revendication 5, **caractérisée en ce que** le rayon intérieur est compris entre 5% et 45%, de préférence entre 10% et 40%, de manière particulièrement préférée entre 20% et 30%, du rayon du couvercle de diffuseur.

7. Turbine à gaz selon la revendication 5 ou 6, **caractérisée en ce que** le rayon extérieur est compris entre 55% et 95%, de préférence entre 60% et 90%, de manière particulièrement préférée entre 70% et 80%, du rayon du couvercle de diffuseur (27).

8. Turbine à gaz selon une des revendications 1 à 7, **caractérisée en ce que**, vus dans la direction d'écoulement de l'air détendu, les capteurs de température (29) sont positionnés de manière uniformément répartie sur un contour circulaire.

9. Turbine à gaz selon une des revendications 1 à 8, **caractérisée en ce que** dans la région du couvercle de diffuseur (27) trois capteurs de température (29) sont disposés.

10. Turbine à gaz selon une des revendications 1 à 9, **caractérisée en ce que** les capteurs de température (29) sont montés sur le couvercle de diffuseur (27).

11. Turbine à gaz selon une des revendications 1 à 10, **caractérisée en ce que** les capteurs de température (29) sont montés sur une paroi de délimitation radialement extérieure du canal d'écoulement suivant le diffuseur (25) sous la forme d'un tube ou sur une paroi de délimitation radialement intérieure du canal d'écoulement (26) du diffuseur (25).
